# EUROPÄISCHE PATENTSCHRIFT

(11) **EP 2 598 758 B1**
(45) Veröffentlichungstag und Bekanntmachung des Hinweises auf die Patenterteilung: **25.06.2014**
(21) Anmeldenummer: 11735808.5
(22) Anmeldetag: 22.07.2011
(51) Int. Cl.: F15B 15/22

(54) **PNEUMATIKANTRIEB**
PNEUMATIC DRIVE
ENTRAÎNEMENT PNEUMATIQUE

(30) Priorität: 29.07.2010 DE 102010032750
(43) Veröffentlichungstag der Anmeldung: 05.06.2013
(73) Patentinhaber: Innomotix GmbH, 83620 Feldkirchen-Westerham (DE)
(72) Erfinder: BAUMGARTNER, Florian, 83026 Rosenheim (DE)
(74) Vertreter: Flach, Dieter Rolf Paul
(86) Internationale Anmeldenummer: PCT/EP2011/003696
(87) Internationale Veröffentlichungsnummer: WO 2012/013322

(56) Entgegenhaltungen:
- DE-A1- 10 138 026
- GB-A- 1 594 268
- US-B1- 6 523 451

## Beschreibung

Die Erfindung betrifft einen Pneumatikantrieb gemäß dem Oberbegriff des Anspruchs 1.

In der Industrie werden häufig hochdynamische Pneumatikantriebseinheiten, insbesondere Pneumatikzylinder und pneumatische Schwenkantriebe, eingesetzt, bei denen es auf hohe Arbeitsgeschwindigkeiten ankommt. Ein Einsatzgebiet ist beispielsweise die Handhabung elektronischer Bauelemente bei deren Herstellung oder wenn die elektronischen Bauelemente getestet werden.

Um einen hohen Produktdurchsatz zu erreichen, ist man bestrebt, die Pneumatikzylinder oder pneumatischen Schwenkantriebe mit möglichst hoher Geschwindigkeit arbeiten zu lassen. Problematisch ist hierbei, dass die Kolben zunächst beschleunigt und anschließend gegen Ende des Kolbenwegs bei Erreichen einer bestimmten Sollposition mit einer möglichst ruck- und stoßfreien Verzögerung wieder sehr schnell bis zum Stillstand abgebremst werden müssen, um anschließend wieder in die entgegengesetzte Richtung verfahren zu werden.

Es wird bekannterweise versucht, diese Probleme mit speziellen Wegmesssystemen und regelbaren pneumatischen Servoventilen zu bewältigen. Derartige Wegmesssysteme und regelbare Servoventile sind jedoch sehr kostenaufwändig, stellen eine zusätzliche externe Masse am Pneumatikzylinder dar, benötigen zusätzlichen Platz und bedingen einen erhöhten elektronisch geregelten Steueraufwand.

Um diese Nachteile zu vermeiden, ist aus der DE 101 38 026 A1 bereits ein Pneumatikantrieb gemäß dem Oberbegriff des Anspruchs 1 bekannt geworden, bei dem jeder Arbeitsraum beidseits des Kolbens einer Pneumatikantriebseinheit über zwei hintereinander angeordnete Wegeventile mit einer Druckluftzuführleitung und einer Druckluftabführleitung verbunden sind. Durch entsprechendes Schalten dieser Wegeventile kann ein ungedrosselter oder gedrosselter Durchfluss für die Zuführung oder Abführung der Druckluft geschaffen werden, wobei zum Abbremsen der Kolbenbewegung Druckluft aktiv in den sich verkleinernden Arbeitsraum eingeleitet wird.

Hat bei diesem bekannten Pneumatikantrieb der Kolben nach Ablauf einer bestimmten Sollzeit die Endposition noch nicht vollständig erreicht, wird die sich im verkleinernden Arbeitsraum befindliche Luft über eine im Regelventil integrierte Dämpfungsdrossel abgeleitet. Hierdurch kann der Kolben in einer Art "Schleichgang" bis zur endgültigen Endposition verfahren werden. Hierbei ist von Bedeutung, dass die Geschwindigkeit des Kolbens in der Endposition einen bestimmten Wert von beispielsweise 0,1 m/sek. nicht überschreitet. Diese geringe zulässige Höchstgeschwindigkeit des Kolbens erfordert einen relativ kleinen freien Querschnitt der Dämpfungsdrossel, über welche die Druckluft aus dem sich verkleinernden Arbeitsraum der Pneumatikantriebseinheit abgeführt wird.

Dieser freie kleine Drosselquerschnitt führt andererseits dazu, dass im sich verkleinernden Arbeitsraum sehr hohe Kompressionsdrücke auftreten können, wenn der Kolben mit daran befestigter Last eine hohe kinetische Energie aufweist, d.h. wenn die bewegten Massen und/oder Geschwindigkeiten hoch sind. Die maximal zulässigen Kompressionsdrücke der Zylinder- und Ventiltlichtungen sind jedoch begrenzt. Bei höherer kinetischer Energie muss deshalb eine Begrenzung auf den maximal zulässigen Kompressionsdruck vorgenommen werden.

Aus der GB 1 594 268 A ist ein doppeltwirkender Pneumatik-zylinder bekannt, der an einem oder an beiden Enden des Zylindergehäuses eine Dämpfungsdrossel mit einem Differenzdruckkolben aufweist, der in Abhängigkeit des im Arbeitsraum des Pneumatikzylinders herrschenden Kompressionsdrucks verschiebbar ist. Der dortige Differenzdruckkolben weist eine kegelige Spitze auf, die mittels Federdruck gegen einen Ventilsitz vorgespannt ist und bei höher werdendem Fluiddruck durch das Fluid vom Ventilsitz weggedrückt wird, wodurch sich der Fluiddurchlass vergrößert. Diese Dämpfungsdrossel soll bei Inbetriebnahme des Pneumatikzylinders, wenn sich kein Fluid in den Arbeitskammern befindet, eine impulsive Betätigung des Zylinders verhindern und gleichzeitig im späteren Betrieb eine normale Betätigung des Pneumatikzylinders sicherstellen.

Der Erfindung liegt daher die Aufgabe zugrunde, einen Pneumatikantrieb der eingangs genannten Art zu schaffen, mit dem auf möglichst einfache Weise der Kompressionsdruck veränderbar ist.

Diese Aufgabe wird erfindungsgemäß mit einem Pneumatikantrieb mit den Merkmalen des Anspruchs 1 gelöst. Vorteilhafte Ausführungsformen der Erfindung sind in den weiteren Ansprüchen beschrieben.

Beim erfindungsgemäßen Pneumatikantrieb weist die Dämpfungsdrossel einen Differenzdruckkolben auf, der in Abhängigkeit des im Arbeitsraum herrschenden Kompressionsdrucks verschiebbar ist, wodurch der von der Druckluft durchströmte freie Drosselquerschnitt in Abhängigkeit des Kompressionsdrucks veränderbar ist. Weiterhin weist der Differenzdruckkolben eine axiale Drosselbohrung auf. Ferner weist die Dämpfungsdrossel ein Drosselelement mit einem Kopfabschnitt auf, wobei der freie Drosselquerschnitt durch die Umfangswand der axialen Drosselbohrung und den Kopfabschnitt begrenzt wird.

Steigt der Kompressionsdruck beim Abbremsen des Kolbens innerhalb des sich verkleinernden Arbeitsraums so stark an, dass die Gefahr besteht, dass der maximal zulässige Kompressionsdruck überschritten wird, bewirkt die durch die Dämpfungsdrossel hindurchgeführte Druckluft eine derartige Verschiebung des Differenzdruckkolbens innerhalb der Dämpfungsdrossel, dass hierdurch der freie Drosselquerschnitt vergrößert wird, so dass ein größerer Volumenstrom hindurchfließen kann und der Kompressionsdruck reduziert wird. Hierdurch kann auf einfache Weise erreicht werden, dass der maximal zulässige Kompressionsdruck nicht überschritten wird. Bei relativ niedrigen Kompressionsdrücken im Pneumatikzylinder kann dagegen der freie Drosselquerschnitt durch den Differenzdruckkolben soweit verkleinert werden, dass dann, wenn sich der abzubremsende Kolben kurz vor seiner Endlage befindet, dieser mit dem nötigen Gegendruck abgebremst werden kann und mit einer niedrigen Geschwindigkeit weiter bis zur Endlage gefahren werden kann.

Der freie Drosselquerschnitt lässt sich auf sehr einfache Weise dadurch einstellen, dass der Differenzdruckkolben mehr oder weniger weit vom vorzugsweise kegelförmigen Kopfabschnitt des Drosselelements entfernt wird.

Gemäß einer besonders vorteilhaften Ausführungsform weist die Dämpfungsdrossel einen Anschlag zur Begrenzung des

Verschiebewegs des Differenzdruckkolbens in Richtung Drosselelement auf, wobei der Anschlag in Bewegungsrichtung des Differenzdruckkolbens verstellbar angeordnet ist. Liegt der Differenzdruckkolben am Anschlag an, so wird hierdurch der minimale freie Drosselquerschnitt bestimmt. Je weiter sich der Differenzdruckkolben vom Anschlag und damit vom Drosselelement entfernt, umso größer wird der freie Drosselquerschnitt und damit der Volumenstrom, der durch diesen Drosselquerschnitt strömen kann. Durch Veränderung der Position des Anschlags können ferner die auf den Differenzdruckkolben wirkenden Federkräfte und damit der Schwellenwert desjenigen Kompressionsdrucks verändert werden, ab dem der Differenzdruckkolben beginnt, sich vom Anschlag zu lösen.

Gemäß einer weiteren vorteilhaften Ausführungsform ist im Differenzdruckkolben ein zweiter Differenzdruckkolben verschiebbar gehalten, der mittels einer Feder in Richtung des Drosselelements vorgespannt ist und den Durchmesser der axialen Drosselbohrung in einem Bereich, der zum Kopfabschnitt des Drosselelements benachbart ist, verringert. Bei dieser Ausführungsform wird durch den kleineren integrierten zweiten Differenzdruckkolben eine gewünschte Drosselquerschnittsvergrößerung zum schnelleren Aufbau des Kompressionsdrucks gleich zu Beginn des Dämpfungsvorganges bzw. ein kürzerer Dämpfungsweg erreicht, ohne dass hierzu der größere Differenzdruckkolben verschoben werden müsste.

Die Erfindung wird nachfolgend anhand der Zeichnungen beispielhaft näher erläutert. Es zeigen:
- Figur 1a :: ein schematisches Schaubild eines erfindungsgemäßen Pneumatikantriebs im drucklosen Zustand, wobei die Dämpfungsdrosseln schematisch dargestellt sind,
- Figur 1b :: die Schaltstellung der ersten und zweiten Ventilanordnung, wenn der Kolben die Startposition verlässt,
- Figur 1c :: die Schaltstellung der ersten und zweiten Ventilanordnung, wenn die aktive Dämpfung (Abbremsung) des Kolbens durch Gegendruckerhöhung beginnt,
- Figur 1d :: die Schaltstellung der ersten und zweiten Ventilanordnung, wenn der Kolben die Soll-position nach Ablauf der Soll-Zeit nicht erreicht hat oder wenn vom Kolben in der Endlage Kräfte ausgeübt werden müssen,
- Figur 2 :: die Dämpfungsdrossel der Figuren 1a bis 1b in detaillierter Darstellung gemäß einer ersten Ausführungsform der Erfindung, und
- Figur 3 :: die Dämpfungsdrossel der Figuren 1a bis ld in detaillierter Darstellung gemäß einer zweiten Ausführungsform der Erfindung.

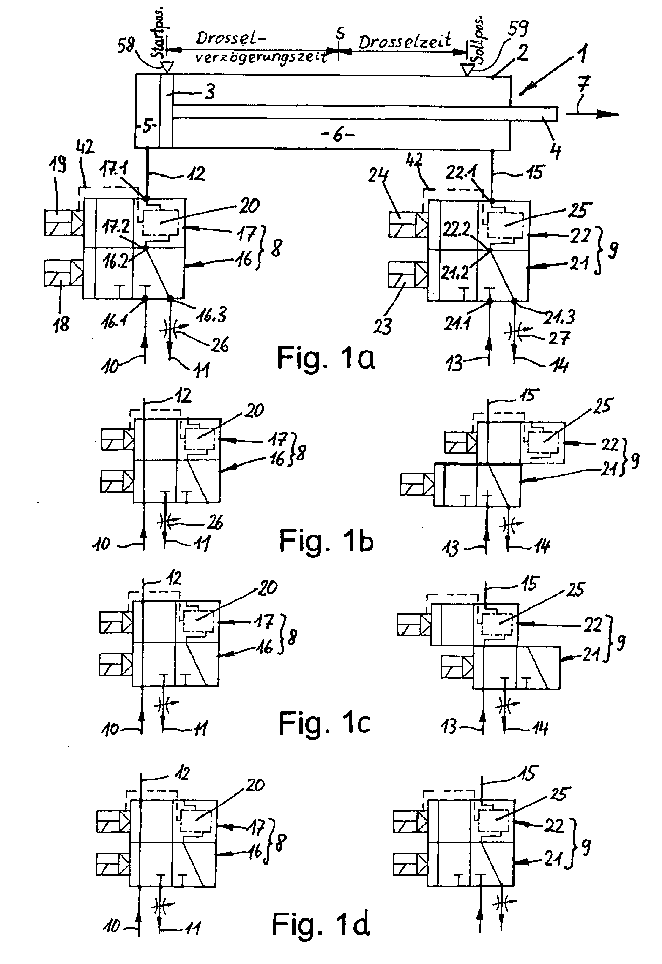

Aus Figur 1a ist eine Pneumatikantriebseinheit 1 in Form eines Pneumatikzylinders mit einem zylindrischen Gehäuse 2 ersichtlich, in dem ein Kolben 3 mit einer Kolbenstange 4 längs verschiebbar geführt ist. Der Kolben 3 unterteilt den Innenraum des Gehäuses 2 in einen Arbeitsraum 5, der sich in Figur 1a links vom Kolben 3 befindet, und einen Arbeitsraum 6, der rechts vom Kolben 3 angeordnet ist. In Figur 1a befindet sich der Kolben 3 in seiner am weitesten links befindlichen Stellung, die hier als Startposition oder erste Position bezeichnet wird. Von dieser Startposition aus ist der Kolben 3 nach rechts in eine zweite Position, die hier als Soll-Position bezeichnet wird und die am weitesten rechts liegende Endlage des Kolbens 3 darstellt, verschiebbar, wie durch den Pfeil 7 angedeutet ist.

Die Bewegung des Kolbens 3 wird durch Druckluft bewirkt, die über eine erste Ventilanordnung 8 und eine zweite Ventilanordnung 9 zu- bzw. abgeführt wird.

Die erste Ventilanordnung 8 steht einerseits mit einer Druckluftzuführleitung 10 und einer Druckluftabführleitung 11 und andererseits mit einer Leitung 12 in Verbindung, welche in den linksseitigen Arbeitsraum 5 mündet.

Die zweite Ventilanordnung 9 steht einerseits mit einer Druckluftzuführleitung 13 und einer Druckluftabführleitung 14 und andererseits mit einer Leitung 15 in Verbindung, die in den rechtsseitigen Arbeitsraum 6 mündet.

Wie aus Figur 1a ersichtlich, besteht die erste Ventilanordnung 8 aus zwei zusammenwirkenden Wegeventilen 16, 17. Das erste Wegeventil 16 ist als 3/2 Wegeventil ausgebildet und weist somit drei Anschlüsse 16.1, 16.2, 16.3 und zwei mögliche Schaltstellungen auf. Der Anschluss 16.1 ist mit der Druckluftzuführleitung 10 verbunden, während der Anschluss 16.3 mit der Druckluftabführleitung 11 verbunden ist. Die Umschaltung zwischen den beiden Schaltstellungen erfolgt mittels eines Elektromagnetventils 18. Das zweite Wegeventil 17 ist als 2/2 Wegeventil ausgebildet und weist somit zwei Anschlüsse 17.1 und 17.2 auf, die in zwei verschiedene Schaltstellungen geschaltet werden können. Der Anschluss 17.1 ist dabei mit der in den linksseitigen Arbeitsraum 5 mündenden Leitung 12 verbunden, während der Anschluss 17.2 mit dem Anschluss 16.2 des ersten Wegeventils 16 verbunden ist.

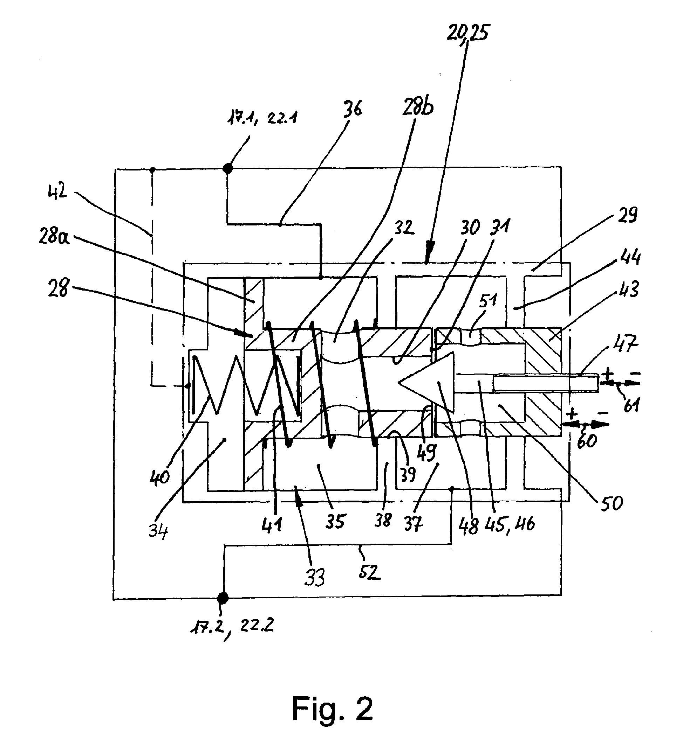

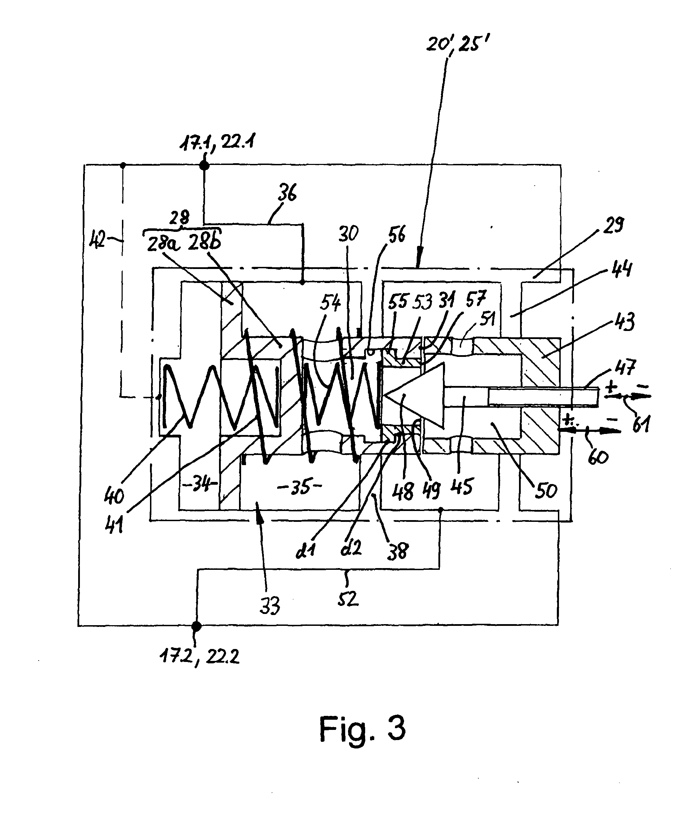

Das zweite Wegeventil 17 der linksseitigen Ventilanordnung 8 weist ferner eine Dämpfungsdrossel 20 auf, die in den Figuren 1a bis 1d lediglich schematisch dargestellt und als einstellbares Drosselventil ausgebildet ist. Die Dämpfungsdrossel 20 wird anhand der Figuren 2 und 3 nachfolgend noch näher beschrieben. In der in Figur 1a gezeigten Schaltstellung des zweiten Wegeventils 17 ist die in den linksseitigen Arbeitsraum 5 mündende Leitung 12 über die Dämpfungsdrossel 20 mit der Druckluftabführleitung 11 verbunden. Die Dämpfungsdrossel 20 befindet sich innerhalb des 2/2 Wegeventils 17.

Die zweite, rechtsseitige Ventilanordnung 9 ist identisch wie die erste Ventilanordnung 8 ausgebildet. Sie besteht aus einem ersten Wegeventil 21 in der Form eines 3/2 Wegeventils und einem damit zusammenwirkenden zweiten Wegeventil 22 in der Form eines 2/2 Wegeventils. Die Anschlüsse des ersten Wegeventils 21 sind mit 21.1, 21.2, 21.3 bezeichnet. Die Anschlüsse des zweiten Wegeventils 22 sind mit 22.1 und 22.2 bezeichnet. Die Umschaltung zwischen den beiden Schaltzuständen erfolgt mittels Elektromagnetventilen 23, 24. Die Anschlüsse 21.1, 21.3 sind mit der Druckluftzuführleitung 13 bzw. mit der Druckluftabführleitung 14 verbunden, der Anschluss 21.2 ist mit dem Anschluss 22.2 verbunden, und der Anschluss 22.1 ist mit der zum rechtsseitigen Arbeitsraum 6 der Pneumatikantriebseinheit 1 führenden Leitung 15 verbunden.

Weiterhin ist auch in das zweite Wegeventil 22 der zweiten Ventilanordnung 9 eine einstellbare Dämpfungsdrossel 25 integriert, die identisch zur Dämpfungsdrossel 20 ausgebildet ist und nachfolgend anhand der Figuren 2, 3 noch näher erläutert wird.

Aus den Figuren 1a bis 1d ist weiterhin erkennbar, dass in den beiden Druckluftabführleitungen 11, 14 außerhalb der Ventilanordnungen 8, 9 jeweils ein weiteres einstellbares Drosselventil 26, 27 angeordnet ist. Mit Hilfe dieser optional vorgesehenen Drosselventile 26, 27 kann zusätzlich die Menge der abzuführenden Druckluft und damit die Kolbengeschwindigkeit eingestellt werden.

Aufbau und Funktionsweise des vorliegenden Pneumatikantriebs entsprechen grundsätzlich demjenigen, der in der DE 101 38 026 A1 beschrieben wird. Im Folgenden wird die Funktionsweise des in den Figuren 1a - 1d gezeigten Pneumatikantriebs daher lediglich kurz zusammengefasst.

Ausgangspunkt ist die in Figur 1a dargestellte linke Endlage des Kolbens 3, die auch als Startposition bezeichnet werden kann. Von dieser Startposition aus soll der Kolben 3 nach rechts bis zu seiner gegenüberliegenden Endlage verschoben werden, die auch als Soll-Position bezeichnet werden kann.

In der linken Endlagenstellung des Kolbens 3 werden die beiden linken Wegeventile 16, 17 der ersten Ventilanordnung 8 zunächst so geschaltet, wie aus Figur 1b ersichtlich. Druckluft kann ungedrosselt von der Druckluftzuführleitung 10 zur Leitung 12 und von dort in den linksseitigen Arbeitsraum 5 strömen. Der sich primärseitig im Arbeitsraum 5 schnell aufbauende Druck beginnt nun, den Kolben 3 mit maximaler Beschleunigung nach rechts zu bewegen. Die zweite, rechte Ventilanordnung 9 ist dabei so geschaltet, dass die aus dem sich verkleinernden, sekundärseitigen Arbeitsraum 6 verdrängte Luft über die Druckluftabführleitung 14 abgeleitet werden kann. Durch entsprechendes Einstellen des Drosselventils 27 kann die Geschwindigkeit, mit der der Kolben 3 nach rechts bewegt wird, eingestellt werden. Weiterhin wird, wenn der Kolben 3 die Startposition verlässt, über einen Positionsschalter 58 eine voreingestellte Drosselverzögerungszeit in Lauf gesetzt und die Ist-Zeitmessung begonnen.

Nach Ablauf der Drosselverzögerungszeit schaltet die zweite Ventilanordnung 9 in eine Stellung um, die in Figur 1c gezeigt ist. In dieser Schaltstellung ist die rechtsseitige Druckluftzuführleitung 13 über die Dämpfungsdrossel 25 mit der Leitung 15 und damit mit dem sich verkleinernden Arbeitsraum 6 verbunden. In diesem Zustand wird aktiv Druckluft in den sich verkleinernden Arbeitsraum 6 eingeleitet, so dass der sich dort aufbauende Gegendruck progressiv zunimmt und der Kolben 3 sehr schnell bis zum Stillstand abgebremst wird. Durch entsprechendes Einstellen der Dämpfungsdrossel 25 kann das Dämpfungsverhalten, d.h. das Bremsverhalten, mittels aktiver Gegendruckerhöhung eingestellt und variiert werden. Die in Figur 1c gezeigte Position der zweiten Ventilanordnung 9 wird in der Regel beibehalten, bis der Kolben 3 die Soll-Position erreicht hat, was mittels eines Positionsschalters 59 erfasst wird (Figur la). Bei Erreichen der Soll-Position wird außerdem die Ist-Zeitmessung gestoppt und mit der Soll-Zeit verglichen. Weicht die Ist-Zeit von der Soll-Zeit ab, so kann der Startzeitpunkt S für die Drosselzeit (Zeit der aktiven Gegendruckerhöhung im sich verkleinernden Arbeitsraum 6) entsprechend nach vorne oder hinten verschoben werden.

Während der gesamten Drosselzeit befindet sich außerdem die erste Ventilanordnung 8 in der selben Stellung wie während der Drosselverzögerungszeit.

Hat der Kolben 3 nach Ablauf der Soll-Zeit die Soll-Position noch nicht erreicht, wird die zweite Ventilanordnung 9 in die in Figur 1d gezeigte Stellung umgeschaltet. In dieser Stellung kann die Druckluft aus dem sich verkleinernden Arbeitsraum 6 sowohl über die Dämpfungsdrossel 25 als auch über das Drosselventil 27, d.h. zweifach gedrosselt, abströmen. Auf diese Weise kann der Kolben 3 in einer Art "Schleichgang" bis zur Soll-Position verfahren werden. In dem Fall, dass die Soll-Position während der Soll-Zeit erreicht wird, ist die in Figur 1d gezeigte Stellung der zweiten Ventilanordnung 9 optional.

In Figur 2 wird im Folgenden ein erstes Ausführungsbeispiel einer erfindungsgemäßen Dämpfungsdrossel 20, 25 beschrieben, die eine differenzdruckabhängige dynamisch geregelte Drosselquerschnittsveränderung ermöglicht. Durch eine derartige dynamisch geregelte Drosselquerschnittsveränderung wird der Kompressionsdruck innerhalb des Pneumatikzylinders 1 und innerhalb der Ventilanordnungen 8, 9 automatisch derart begrenzt, dass der maximal zulässige Kompressionsdruck, der insbesondere durch die Zylinder- und Ventildichtungen vorgegeben ist, nicht überschritten wird. Gleichzeitig ermöglicht eine derartige Dämpfungsdrossel 20, 25 ein langsames Einfahren des Kolbens 3 in seine Soll- oder Endposition, wozu ein kleiner freier Drosselquerschnitt erforderlich ist.

Die in Figur 2 dargestellte Dämpfungsdrossel 20, 25 weist einen Differenzdruckkolben 28 auf, der in einem in Figur 2 lediglich schematisch dargestellten Ventilgehäuse 29 längs verschiebbar ist. Der Differenzdruckkolben 28 weist einen Kolbenabschnitt 28a mit größerem Außendurchmesser und einen Kolbenabschnitt 28b mit kleinerem Außendurchmesser auf. Weiterhin weist der Differenzdruckkolben 28 eine axiale Drosselbohrung 30 auf, die sich, ausgehend von einer Stirnwand 31, lediglich über einen Teil des Kolbenabschnitts 28b erstreckt und mit Radialbohrungen 32 verbunden ist.

Der Kolbenabschnitt 28a mit größerem Durchmesser ist in einer ersten Kammer 33 des Ventilgehäuses 29 angeordnet und unterteilt diese in einen ersten Druckraum 34, der sich in Figur 2 auf der linken Seite des Kolbenabschnitts 28a befindet, und einen auf der gegenüberliegenden Seite des Kolbenabschnittes 28a angeordneten zweiten Druckraum 35. Die Radialbohrungen 32 münden in den zweiten Druckraum 35. Weiterhin ist der zweite Druckraum 35 über eine Leitung 36 mit dem Anschluss 17.1, 22.1 des Wegeventils 17, 22 verbunden, und steht damit mit dem Arbeitsraum 5 bzw. 6 der Pneumatikantriebseinheit 1 in Druckluftverbindung.

Das Ventilgehäuse 29 weist weiterhin neben der ersten Kammer 33 eine zweite Kammer 37 auf, die von der ersten Kammer 33 durch eine Wand 38 getrennt ist. Der Kolbenabschnitt 28b durchdringt einen Durchgang 39 der Wand 38, ist in der Wand 38 verschiebbar gelagert und erstreckt sich in die zweite Kammer 37 hinein.

Im ersten Druckraum 34 ist eine erste Feder 40 angeordnet, die sich mit einem Ende an der linksseitigen Wand des Druckraums 34 und mit ihrem anderen Ende am Differenzdruckkolben 28 abstützt. Die erste Feder 40 ist als Druckfeder ausgebildet und versucht, den Differenzdruckkolben 28 nach rechts zu drücken.

Im zweiten Druckraum 35 ist eine zweite Feder 41 angeordnet, welche sich mit einem Ende am Kolbenabschnitt 28a des Differenzdruckkolbens 28 und mit ihrem gegenüberliegenden Ende an der Wand 38 abstützt. Die zweite Feder 41 ist ebenfalls als Druckfeder ausgebildet und versucht, den Differenzdruckkolben 28 entgegen der Federkraft der ersten Feder 40 und entgegen dem Luftdruck im ersten Druckraum 34, der über eine gestrichelt dargestellte Leitung 42 im ersten Druckraum 34 aufgebaut wird, nach links zu drücken.

Die Hubbewegung des Differenzdruckkolbens 28 nach rechts wird durch einen einstellbaren Anschlag 43 begrenzt. Im gezeigten Ausführungsbeispiel ist der Anschlag 43 hohlzylinderförmig ausgebildet und in einer Wand 44 des Ventilgehäuses 29 gelagert. Die Wand 44 begrenzt die zweite Kammer 37 des Ventilgehäuses 29 in axialer Richtung nach außen.

Im Anschlag 43 ist ein Drosselelement 45 in der Form einer Drosselschraube längs verstellbar festgelegt. Ein Schraubenschaft 46 mit einem Gewinde 47 ist hierzu in eine axiale Gewindebohrung der äußeren Stirnwand des Anschlags 43 eingeschraubt.

Das Drosselelement 45 weist an seinem innenliegenden Ende einen kegelförmigen Kopfabschnitt 48 auf, dessen Spitze in der in Figur 2 gezeigten Stellung, in der sich der Differenzdruckkolben 28 nah am Anschlag 43 befindet oder an diesem anschlägt, sich in die axiale Drosselbohrung 30 des Differenzdruckkolbens 28 hinein erstreckt. Hierdurch wird der freie Drosselquerschnitt 49 zwischen der Umfangswand der axialen Drosselbohrung 30 und dem Kopfabschnitt 48 stark verkleinert. Liegt der Differenzdruckkolben 28 am Anschlag 43 an, so ergibt sich hieraus der kleinste freie Drosselquerschnitt 49. Dieser kleinste freie Drosselquerschnitt 49 wird durch Verstellen des Drosselelements 45 in (+) oder (-)-Richtung (siehe Doppelpfeil 61) relativ zum Anschlag 43 zweckmäßigerweise so eingestellt, dass beim Einfahren des Kolbens 3 in die Endposition die kleinste gewünschte Endgeschwindigkeit im Bereich des letzten Millimeters vor Erreichen der Endposition erreicht wird.

Durch eine Verstellung des Anschlags 43 in (+)-Richtung relativ zum Ventilgehäuse 29 (siehe Doppelpfeil 60) wird der Differenzdruckkolben 28 nach links verlagert, wodurch die Federkraft F2 der zweiten Feder 41 verkleinert und die Federkraft F1 der ersten Feder 40 vergrößert wird. Hierdurch erhöht sich der gewünschte Kompressionsdruck pksoll entsprechend dem Gleichgewichtszustand F (pksoll) + F2 = F (p) + F1. Hierbei bedeutet F (pksoll) diejenige Kraft, mit welcher der Differenzdruckkolben 28 durch den gewünschten Kompressionsdruck pksoll im zweiten Druckraum 35 nach links (Figur 2) gedrückt wird. F (p) bedeutet diejenige Kraft, mit der der Differenzdruckkolben 28 durch Einleiten von Druckluft mit dem Druck (p) in den ersten Druckraum 34 nach rechts gedrückt wird. Bei Verstellung des Anschlags 43 in (-)-Richtung erfolgt das Gegenteil, d.h. der gewünschte Kompressionsdruck pksoll wird reduziert. Durch den Einsatz der ersten Feder 40 kann somit auch ein höherer Kompressionsdruck als der Betriebsdruck eingestellt werden.

Die axiale Drosselbohrung 30 steht über den freien Drosselquerschnitt 49 mit einem dritten Druckraum 50 in Fluidverbindung, der sich innerhalb des Anschlags 43 befindet. Dieser dritte Druckraum 50 ist wiederum über radiale Durchlässe 51 im Anschlag 43 mit der zweiten Kammer 37 in Druckluftverbindung. Die zweite Kammer 37 ist über eine Leitung 52 mit dem Anschluss 17.2, 22.2 verbunden.

Im Folgenden wird die Funktion der Dämpfungsdrossel 20, 24 in der Dämpfungsphase - wie in Figur 1c dargestellt - näher erläutert, in der sich der Kolben 3 in Richtung der Soll-Position bewegt und nach seiner anfänglichen Beschleunigung wieder abgebremst wird. In dieser Phase wird, wie anhand von Figur 1c beschrieben wurde, Druckluft über die Druckluftzuführleitung 13 und die Dämpfungsdrossel 25 in den sich verkleinernden Arbeitsraum 6 zugeführt, um eine besonders schnelle Abbremsung des Kolbens 3 zu erreichen.

Solange der Kompressionsdruck innerhalb des Arbeitsraums 6 des Pneumatikzylinders 1 kleiner oder gleich dem eingestellten (gewünschten) Kompressionsdruck pksoll ist, liegt der Differenzdruckkolben 28 am Anschlag 43 an. Übersteigt der Kompressionsdruck durch den kleiner werdenden Arbeitsraum 6 und durch die (optionale) Zuführung der Druckluft über die Druckluftzuführleitung 13 den Sollwert pksoll, so hebt der Differenzdruckkolben 28 vom Anschlag 43 ab und entfernt sich zunehmends vom kegeligen Kopfabschnitt 38 des Drosselelements 45, wodurch der freie Drosselquerschnitt 49 vergrößert wird. Der Druck im zweiten Druckraum 35 und damit der Kompressionsdruck in dem sich verkleinernden Arbeitsraum 6 des Pneumatikzylinders 1 kann dadurch abgesenkt und gegebenfalls an denjenigen Druck angeglichen werden, der im dritten Druckraum 50 oder in der zweiten Kammer 37 herrscht. Sinkt der Kompressionsdruck auf oder unter den Sollwert pksoll, so legt sich der Differenzdruckkolben 28 bei kleiner werdendem Drosselquerschnitt 49 wieder an den Anschlag 43 an. Dieser kontinuierliche Regelkreis ist beim Stillstand des Kolbens 3 beendet.

Die beschriebene Funktion gilt auch für den Betriebszustand des Pneumatikantriebs, bei dem sich die zweite Ventilanordnung 9 in der in Figur ld dargestellten Position befindet.

Anhand von Figur 3 wird im Folgenden eine zweite Ausführungsform einer erfindungsgemäßen Dämpfungsdrossel 20', 25' beschrieben, die beim Pneumatikantrieb von Figur 1a zum Einsatz kommen kann.

Die Dämpfungsdrossel 20', 25' weist sämtliche Komponenten auf, die im Zusammenhang mit der Dämpfungsdrossel 20, 25 des ersten Ausführungsbeispiels beschrieben worden sind, so dass zur Vermeidung von Wiederholungen hierauf verwiesen wird.

Die zweite Ausführungsform unterscheidet sich von der ersten Ausführungsform darin, dass innerhalb der axialen Drosselbohrung 30 des Differenzdruckkolbens 28 ein zweiter Differenzdruckkolben 53 angeordnet ist, der mittels einer dritten Feder 54 in Richtung Drosselelement 45 gedrückt wird, jedoch durch die über die Leitung 52 zugeführte Druckluft (zum Abbremsen des Kolbens 3) derart relativ zum Differenzdruckkolben 28 verschoben werden kann, dass der freie Drosselquerschnitt 49 vergrößert wird, bevor sich der Differenzdruckkolben 28 bewegt.

Der zweite Differenzdruckkolben 53 ist hülsenförmig ausgebildet und liegt an der Umfangswand der axialen Drosselbohrung 30 an. Eine sich radial nach außen erstreckende Schulter 55 des zweiten Differenzdruckkolbens 53 greift in eine radiale Umfangsaussparung 56 des Differenzdruckkolbens 28 ein und dient als Anschlag zur Begrenzung des axialen Verschiebewegs des zweiten Differenzdruckkolbens 53. In der in Figur 3 gezeigten Stellung, in der sich der zweite Differenzdruckkolben 53 in seiner am weitesten rechts befindlichen Stellung befindet, fluchtet die Stirnwand 57 des zweiten Differenzdruckkolbens 53 mit der Stirnwand 31 des Differenzdruckkolbens 28. Es ist ersichtlich, dass durch die Wanddicke des zweiten Differenzdruckkolbens 53 der Innendurchmesser der axialen Drosselbohrung 30 des Differenzdruckkolbens 28 verringert wird.

Die Federhärte der dritten Feder 54 ist derart beschaffen, dass beim Zuführen von Druckluft über die Leitung 52, d.h. wenn sich die zweite Ventilanordnung 9 in der in Figur 1c gezeigten Position befindet, der zweite Differenzdruckkolben 53 relativ zum Differenzdruckkolben 28 verschiebt, bevor der Differenzdruckkolben 28 verschoben wird. Die Verschiebung des zweiten Differenzdruckkolbens 53 bewirkt eine Vergrößerung des freien Drosselquerschnitts 49. Im Gegensatz zum ersten Ausführungsbeispiel, bei dem der freie Drosselquerschnitt 49 erst beim Erreichen bzw. Überschreiten des gewünschten Kompressionsdrucks pksoll vergrößert wird, wird bei dem zweiten Ausführungsbeispiel durch einen kleineren integrierten Differenzdruckkolben 53 und die dritte Feder 54 eine gewünschte Vergrößerung des freien Drosselquerschnitts 49 zum schnelleren Aufbau des Kompressionsdrucks gleich zu Beginn des Dämpfungsvorganges bzw. ein kürzerer Dämpfungsweg erreicht. Die Rückstellung des zweiten Differenzdruckkolbens 53 auf den kleinsten freien Drosselquerschnitt 49 erfolgt noch vor Erreichen des gewünschten Kompressionsdrucks pksoll bzw. vor Rückstellung des Differenzdruckkolbens 28 an den Anschlag 43 durch ein abgestimmtes Verhältnis der Durchmesser d1 der Schulter 55 zum Durchmesser d2 der Drosselbohrung 30 und die dritte Feder 54.

Die beschriebene Dämpfungsdrossel (20, 24, 20', 25') kann sowohl bei Pneumatikantrieben eingesetzt werden, bei denen beim Abbremsvorgang des Kolbens 3 aktiv Luft in den sich verkleinernden Arbeitsraum 6 eingeleitet wird, als auch bei Pneumatikantrieben ohne eine derartige aktive Gegenlufteinleitung, bei denen der Kolben 3 allein durch die gedrosselte Luftabführung abgebremst wird.

## Patentansprüche

1. Pneumatikantrieb mit
- einer Pneumatikantriebseinheit (1), die einen zwischen einer ersten und einer zweiten Position bewegbaren Kolben (3) aufweist,
- einer an eine erste Druckluftzuführleitung. (10) und eine erste Druckluftabführleitung (11) angeschlossenen ersten Ventilanordnung (8), über welche Druckluft in einen ersten Arbeitsraum (5) der Pneumatikantriebseinheit (1) zugeführt und aus diesem abgeführt werden kann,
- einer an eine zweite Druckluftzuführleitung (13) und eine zweite Druckluftabführleitung (14) angeschlossenen zweiten Ventilanordnung (9), über welche Druckluft einem zweiten, auf der gegenüberliegenden Seite des Kolbens (3) angeordneten Arbeitsraum (6) zugeführt und aus diesem abgeführt werden kann,
- wobei die erste und/oder zweite Ventilanordnung (8, 9) ein Wegeventil (17, 22) mit einer Dämpfungsdrossel (20, 25; 20', 25') zur Begrenzung des durch das Wegeventil (17, 22) hindurchströmenden Lufvolumenstroms aufweist,
**dadurch gekennzeichnet, dass** die Dämpfungsdrossel (20, 25; 20', 25') einen Differenzdruckkolben (28) aufweist, der in Abhängigkeit des im Arbeitsraum (5, 6) herrschenden Kompressionsdrucks verschiebbar ist, wodurch der von der Luft durchströmte freie Drosselquerschnitt (49) der Dämpfungsdrossel (20, 25; 20', 25') in Abhängigkeit des Kompressionsdrucks veränderbar ist, dass der Differenzdruckkolben (28) eine axiale Drosselbohrung (30) aufweist,
und dass die Dämpfungsdrossel (20, 25; 20', 25') ein Drosselelement (45) mit einem Kopfabschnitt (48) aufweist, wobei der freie Drosselquerschnitt (49) durch die Umfangswand der axialen Drosselbohrung (30) und den Kopfabschnitt (48) begrenzt wird.

2. Pneumatikantrieb nach Anspruch 1, **dadurch gekennzeichnet, dass** der Kopfabschnitt (48) des Drosselelements (45) aus einer kegelförmigen Spitze besteht.

3. Pneumatikantrieb nach Anspruch 1 oder 2, **dadurch gekennzeichnet, dass** das Drosselelement (45) aus einer Drosselschraube besteht, deren Einschraubtiefe veränderbar ist.

4. Pneumatikantrieb nach einem der Ansprüche 1 bis 3, **dadurch gekennzeichnet, dass** die Dämpfungsdrossel (20, 25; 20', 25') einen Anschlag (43) zur Begrenzung des Verschiebewegs des Differenzdruckkolbens (28) in Richtung Drosselelement (45) aufweist, wobei der Anschlag (43) in Bewegungsrichtung des Differenzdruckkolbens (28) verstellbar angeordnet ist.

5. Pneumatikantrieb nach Anspruch 3 oder 4, **dadurch gekennzeichnet, dass** das Drosselelement (45) derart verstellbar am Anschlag (43) gehaltert ist, dass die Relativlage des Kopfabschnitts (48) relativ zum Anschlag (43) veränderbar ist.

6. Pneumatikantrieb nach einem der vorhergehenden Ansprüche, **dadurch gekennzeichnet, dass** im Differenzdruckkolben (28) ein von der Druckluft durchströmbarer zweiter Differenzdruckkolben (53) verschiebbar gehaltert ist, der mittels einer Feder (54) in Richtung des Drosselelements (45) vorgespannt ist und den Durchmesser (d2) der axialen Drosselbohrung (30) in einem Bereich, der zum Kopfabschnitt (48) des Drosselelements (45) benachbart ist, verringert.

## Claims

1. Pneumatic drive comprising
- a pneumatic drive unit (1) which comprises a piston (3) which can be moved between a first and a second position,
- a first valve arrangement (8) which is connected to a first compressed air supply line (10) and a first compressed air removal line (11) and via which compressed air can be supplied to and removed from a first work space (5) of the pneumatic drive unit (1),
- a second valve arrangement (9) which is connected to a second compressed air supply line (13) and a second compressed air removal line (14) and via which compressed air can be supplied to and removed from a second work space (6), which is arranged on the opposite side of the piston (3),
- the first and/or second valve arrangement (8, 9) comprising a directional control valve (17, 22) having a damping throttle (20, 25; 20', 25') for limiting the air volume flow flowing through the directional control valve (17, 22),
**characterised in that** the damping throttle (20, 25; 20', 25') comprises a differential pressure piston (28) which can be displaced on the basis of the compression pressure prevailing in the work space (5, 6), whereby the free throttle cross-section (49), through which the air flows, of the damping throttle (20, 25; 20', 25') can be changed on the basis of the compression pressure, **in that** the differential pressure piston (28) comprises an axial throttling port (30), and **in that** the damping throttle (20, 25; 20', 25') comprises a throttle element (45) having a head portion (48), the free throttle cross-section (49) being limited by the circumferential wall of the axial throttling port (30) and the head portion (48).

2. Pneumatic drive according to claim 1, **characterised in that** the head portion (48) of the throttle element (45) consists of a conical tip.

3. Pneumatic drive according to either claim 1 or claim 2, **characterised in that** the throttle element (45) consists of a throttle screw, the reach of which can be changed.

4. Pneumatic drive according to any of claims 1 to 3, **characterised in that** the damping throttle (20, 25; 20', 25') comprises a stop (43) for limiting the displacement path of the differential pressure piston (28) in the direction of the throttle element (45), the stop (43) being arranged so as to be adjustable in the direction of movement of the differential pressure piston (28).

5. Pneumatic drive according to either claim 3 or claim 4, **characterised in that** the throttle element (45) is adjustably mounted on the stop (43) in such a way that the position of the head portion (48) relative to the stop (43) can be changed.

6. Pneumatic drive according to any of the preceding claims, **characterised in that** a second differential pressure piston (53), through which the compressed air can flow, is displaceably mounted in the differential pressure piston (28), is biased in the direction of the throttle element (45) by means of a spring (54), and reduces the diameter (d2) of the axial throttling port (30) in a region adjacent to the head portion (48) of the throttle element (45).

## Revendications

1. Entraînement pneumatique comprenant
- une unité d'entraînement pneumatique (1), qui comprend un piston (3) déplaçable entre une première et une seconde position,
- un premier agencement de valve (8) branché à une première conduite d'alimentation d'air comprimé (10) et à une première conduite d'évacuation d'air comprimé (11), agencement au moyen duquel de l'air comprimé peut être alimenté dans une première chambre de travail (5) de l'unité d'entraînement pneumatique (à) et être évacué hors de celle-ci,
- un second agencement de valve (9) branché à une seconde conduite d'alimentation d'air comprimé (13) et à une seconde conduite d'évacuation d'air comprimé (14), agencement au moyen duquel de l'air comprimé peut être alimenté dans une seconde chambre de travail (6), agencée sur le côté opposé du piston (3), et être évacué hors de celle-ci,
- dans lequel le premier et/ou le second agencement de valve (8, 9) comprend une valve distributrice (17, 22) avec un étranglement d'amortissement (20, 25 ; 20', 25') pour limiter le flux volumétrique d'air qui s'écoule à travers la valve distributrice (17, 22),
**caractérisé en ce que** l'étranglement d'amortissement (20, 25 ; 20', 25') comprend un piston à pression différentielle (28) qui est déplaçable en fonction de la pression de compression régnant dans la chambre de travail (5, 6), en raison de quoi la section d'étranglement libre (49), traversée par l'air, de l'étranglement d'amortissement (20, 25 ; 20', 25') peut être modifiée en fonction de la pression de compression,
**en ce que** le piston à pression différentielle (28) comporte un perçage d'étranglement axial (30),
et **en ce que** l'étranglement d'amortissement (20, 25 ; 20', 25') comprend un élément d'étranglement (45) avec un tronçon de tête (48), dans lequel la section d'étranglement libre (49) est délimitée par la paroi périphérique du perçage d'étranglement axial (30) et par le tronçon de tête (48).

2. Entraînement pneumatique selon la revendication 1, **caractérisé en ce que** le tronçon de tête (48) de l'élément d'étranglement (45) est constitué par une pointe de forme conique.

3. Entraînement pneumatique selon la revendication 1 ou 2, **caractérisé en ce que** l'élément d'étranglement (45) est une vis d'étranglement dont la profondeur de vissage peut être modifiée.

4. Entraînement pneumatique selon l'une des revendications 1 à 3, **caractérisé en ce que** l'étranglement d'amortissement (20, 25 ; 20', 25') comprend une butée (43) pour limiter le trajet de déplacement du piston à pression différentielle (28) en direction de l'élément d'étranglement (45), ladite butée (43) étant agencée de manière réglable dans la direction de déplacement du piston à pression différentielle (28).

5. Entraînement pneumatique selon la revendication 3 ou 4, **caractérisé en ce que** l'élément d'étranglement (45) est tenu sur la butée (43) de manière réglable, de telle façon que la position relative du tronçon de tête (48) par rapport à la butée (43) peut être modifiée.

6. Entraînement pneumatique selon l'une des revendications précédentes, **caractérisé en ce qu'**un second piston à pression différentielle (53) susceptible d'être traversé par l'air comprimé est maintenu de manière déplaçable dans le piston à pression différentielle, le second piston étant précontraint au moyen d'un ressort (54) en direction de l'élément d'étranglement (45), et réduit le diamètre (d2) du perçage d'étranglement axial (30) dans une région qui est voisine du tronçon de tête (48) de l'élément d'étranglement (45).
